(19) Europäisches Patentamt
European Patent Office
Office européen des brevets

(11) Veröffentlichungsnummer: **0 395 801**
**A1**

(12) **EUROPÄISCHE PATENTANMELDUNG**

(21) Anmeldenummer: **89250070.3**

(51) Int. Cl.5: **B60L  9/30**

(22) Anmeldetag: **02.11.89**

(30) Priorität: **05.05.89 DE 3915211**

(43) Veröffentlichungstag der Anmeldung:
**07.11.90 Patentblatt  90/45**

(84) Benannte Vertragsstaaten:
**AT DE ES FR IT**

(71) Anmelder: **Licentia Patent-Verwaltungs-GmbH**
**Theodor-Stern-Kai 1**
**D-6000 Frankfurt/Main 70(DE)**

(72) Erfinder: **Tadros, Yehia, Dr.-Ing.**
**Oranienburger Chaussee 58**
**D-1000 Berlin 28(DE)**

(74) Vertreter: **Lertes, Kurt, Dr. et al**
**Licentia Patent-Verwaltungs-GmbH**
**Theodor-Stern-Kai 1**
**D-6000 Frankfurt/M 70(DE)**

(54) **Schaltungsanordnung für an Fahrdrahtspannungen verschiedener Systeme betreibbare Mehrsystemfahrzeuge.**

(57) Für an Fahrdrahtspannungen verschiedener Systeme betreibbare Mehrsystemfahrzeuge mit einem aus abschaltbaren Halbleiterschaltern bestehenden Netzstromrichter, der an eine Wechselspannung oder eine von zwei Gleichspannungen anschließbar ist und über einen Pulswechselrichter Drehstromfahrmotoren speist, soll der hohe Schaltungsaufwand vermieden werden, der sich durch Spannungsaufteilung bei Reihenschaltung von GTO-Thyristoren ergibt. Die Erfindung besteht darin, daß zwei aus Halbpolen aufgebaute und parallelgeschaltete Brückenschaltungen Verwendung finden, die bei Wechselspannungsbetrieb aus getrennten Sekundärwicklungen des Netztransformators gespeist und bei Gleichspannungsbetrieb umgeschaltet werden, wobei beim Anliegen der höheren Gleichspannung und auch der niedrigeren Gleichspannung beide Brückenschaltungen in Reihe liegen und netz-wie auch lastseitig über je einen Spannungsteiler aus zwei Kondensatoren angeschlossen sind. Die mittleren Teilerpunkte der Spannungsteiler sind mit dem Reihenschaltungspunkt der beiden Brücken verbunden und die Sekundärwicklungen des Netztransformators als Längsinduktivitäten in die Verbindungen der kurzgeschlossenen Brückendiagonalen zu den netz- oder lastseitig liegenden Spannungsteilern einbezogen.

FIG.2

Die Erfindung bezieht sich auf eine Schaltungsanordnung für an Fahrdrahtspannungen verschiedener Systeme betreibbare Mehrsystemfahrzeuge, wie sie im Oberbegriff des Anspruchs 1 näher definiert ist.

Eine derartige Schaltungsanordnung ist beispielsweise aus der EP 204 690 A1 weitgehend bekannt.

Bei der Einspeisung mit der höheren Gleichspannung, die üblicherweise 3 kV beträgt, aber im Bahnbetrieb bis auf 4 kV steigen kann, wird ein Halbpol, der bei Wechselspannungseinspeisung als Vierquadrantensteller arbeitenden Brückenschaltung als Abwärts-Gleichstromsteller eingesetzt. Die abschaltbaren Halbleiterschalter müssen dabei nicht nur für die zum Beispiel 2,5 kV betragende Zwischenkreisspannung, sondern für die maximale Netzgleichspannung, also bis 4 kV, ausgelegt sein. Werden als abschaltbare Halbleiterschalter GTO-Thyristoren eingesetzt, reicht zur Zeit die Spannungsfestigkeit nur eines Thyristors allein nicht aus, so daß in jedem Brückenstrang die Reihenschaltung mehrerer GTO-Thyristoren erforderlich ist. Dabei führen die Anforderungen hinsichtlich der Spannungsaufteilung an den GTO-Thyristoren sowie die erforderlichen zahlreichen Schaltkontakte zu einem sehr hohen Schaltungsaufwand, der auf Triebfahrzeugen aus räumlichen und wirtschaftlichen Gründen unerwünscht ist.

Es ist bereits vorgeschlagen worden, zwei aus Halbpolen aufgebaute Brückenschaltungen zu verwenden, die bei Wechselspannungsbetrieb parallelgeschaltet und bei Gleichspannungsbetrieb auf Reihenschaltung umgeschaltet werden. Auch dort stand die Aufgabe im Vordergrund, mit vorhandenen Bauelementen auszukommen mit einer möglichst geringen Anzahl von Umschaltern.

Aufgabe der vorliegenden Erfindung ist es, solche Schaltungen weiter zu verbessern und zu vereinfachen.

Diese Aufgabe wird gemäß den kennzeichnenden Merkmalen des Anspruches 1 und in weiterer Modifikation des Anspruchs 4 gelöst. Vorteilhafte Ausgestaltungen sind den Unteransprüchen entnehmbar.

Anhand von schematischen Ausführungsbeispielen wird die Erfindung im nachstehenden näher erläutert. Es zeigen:

Fig. 1 die Schaltungsanordnung bei Wechselspannungsbetrieb,

Fig. 2 die Schaltungsanordnung bei Gleichspannungsbetrieb 3 kV,

Fig. 3 die Schaltungsanordnung bei Gleichspannungsbetrieb 1,5 kV,

Fig. 4 eine weitere Schaltungsanordnung für Gleichspannungsbetrieb 1,5 kV.

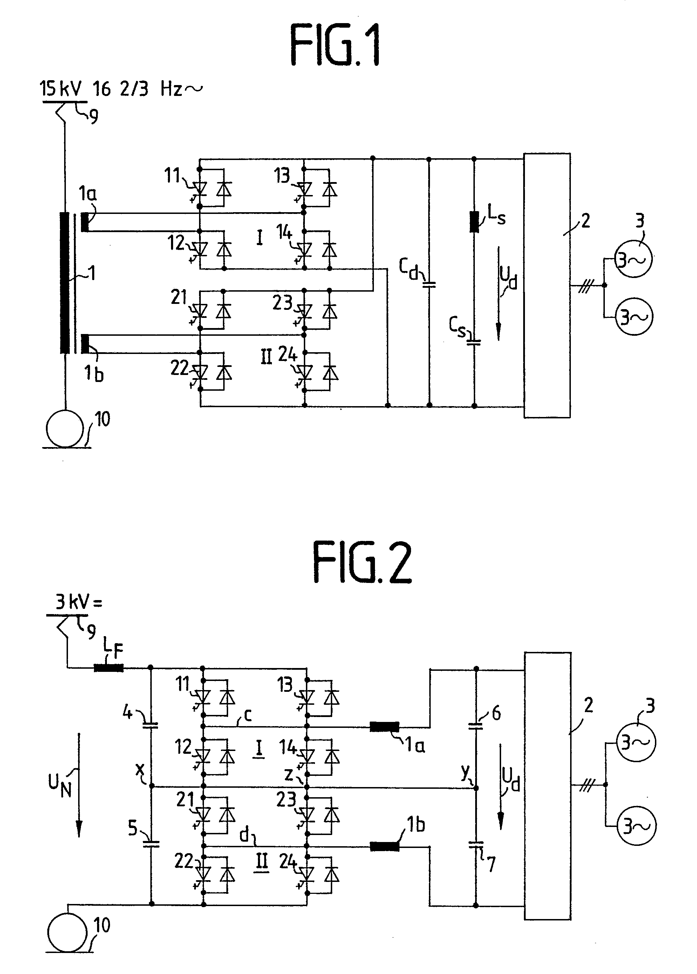

Im Wechselspannungsbetrieb, wie ihn Fig. 1 zeigt, wird eine Fahrdrahtspannung von 15 kV 16 2/3 Hz zwischen Fahrleitung 9 und Rad/Schiene 10 über einen Netztransformator 1 auf ca. 1,5 kV~heruntertransformiert. Diese abgesenkte Spannung wird von den Sekundärwicklungen 1a, 1b des Netztransformators den beiden Brückenschaltungen II und II zugeführt, die jeweils lediglich mit vier GTO-Thyristoren 11, 12, 13, 14 bzw. 21, 22, 23, 24 und diesen antiparallelgeschalteten Freilaufdioden in den Brückenzweigen ausgestattet sind. Die Thyristoren sind z.B. bei einer Sperrspannung von 4,5 kV für eine Zwischenkreisspannung von z.B. 2,5 kV ausgelegt. Die Brücken I und II sind parallelgeschaltet und speisen über den Zwischenkreis einen Drehstrom-Pulswechselrichter 2 und über diesen zwei Drehstromfahrmotoren 3. Die Brücken arbeiten bei Wechselspannungsbetrieb als Vierquadrantensteller, d.h. es ist bei Bremsbetrieb eines Triebfahrzeuges Rückspeisung ins Netz möglich.

Bei Gleichspannungseinspeisung mit $U_N$ = 3 kV ist - vgl. Fig. 2 - der Netztransformator 1 herausgeschaltet. Die Primärwicklung ist kurzgeschlossen (hier nicht dargestellt), die Sekundärwicklungen 1a und 1b finden dagegen als Längsinduktivitäten Verwendung. Beide Brückenschaltungen I und II liegen dabei in Reihe und wirken als Gleichstromsteller (Zweiquadrantensteller). Sie sind netzseitig über einen Spannungsteiler mit Filterkondensatoren 4 und 5 an das Fahrleitungsnetz angeschlossen und lastseitig über einen Spannungsteiler mit den Kondensatoren 6 und 7 mit dem Pulswechselrichter 2 verbunden. Aus den Halbpolen des Vierquadrantenstellers entsteht die Reihenschaltung von zwei Halbleiterschaltern. Durch die Parallelschaltung der Brückenhälften ergibt sich eine gesteigerte Leistungsfähigkeit. Die mittleren Teilerpunkte x und y der Spannungsteiler sind mit dem Reihenschaltungspunkt z der beiden Brücken verbunden. Die Sekundärwicklungen 1a und 1b des Netztransformators 1 sind als Längsinduktivitäten in die Verbindungen der kurzgeschlossenen Brückendiagonalen c und d zu den lastseitigen Spannungsteilerkondensatoren 6 und 7 eingeschaltet. Diese Längsinduktivitäten haben hier auch Bedeutung im Rückspeisebetrieb, d.h. bei Netzbremse und dienen nach Aufladung der Spannungshochsetzung. Mit $L_F$ ist noch eine Filterdrossel bezeichnet, die in Verbindung mit den Kondensatoren 4 und 5 u.a. der Ausfilterung der Wechselanteile in der Fahrdrahtspannung und die Erhöhung der Eingangsimpedanz des Netzstromrichters bei 50 Hz dient.

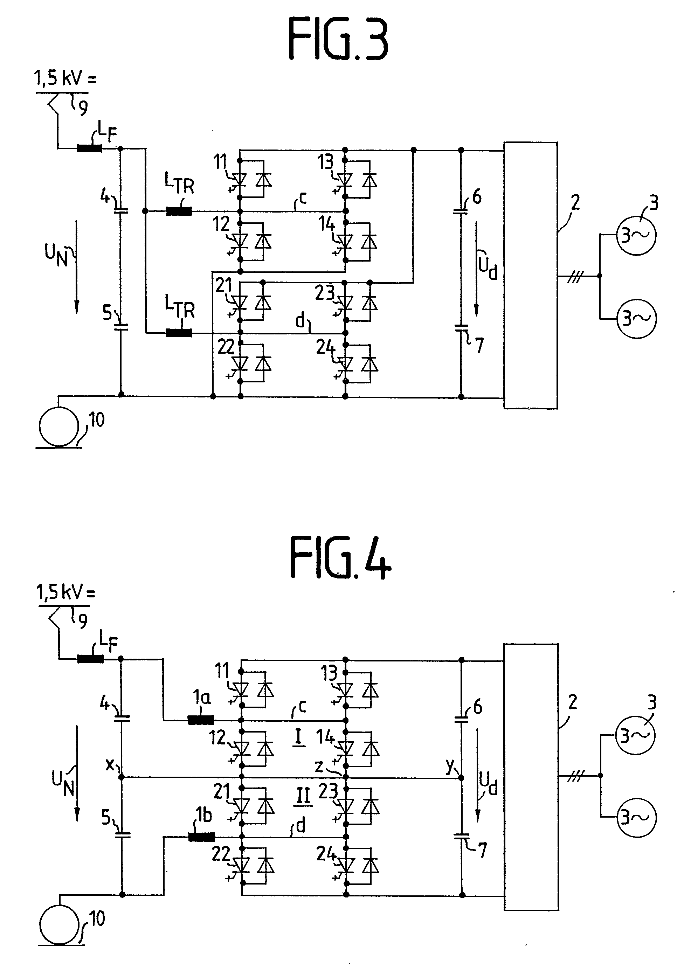

Will man das Fahrzeug an der geringeren Fahrdrahtspannung von 1,5 kV = betreiben, ergeben sich zwei Möglichkeiten. In Fig. 4 ist die Reihenschaltung der Brücken I und II beibehalten worden, ebenso die Spannungsteilung. Die als Längsinduktivitäten wirksamen Sekundärwicklungen 1a und 1b sind jedoch auf die Netzseite der Brücken umgeschaltet worden und liegen in den Zuleitungen von den netzseitigen Spannungsteilerkondensatoren 4 und 5 zu den kurzgeschlossenen Brückendiagonalen c und d. Sie dienen jetzt bei Fahrbetrieb der Hochsetzung der niedrigeren Speisespannung von 1,5 kV = auf die höherliegende Zwischenkreisspannung.

Es kann dadurch eine geregelte Zwischenkreisgleichspannung von 2,5 kV beibehalten werden. Dies ist für die dem Zwischenkreisumrichter verbundenen Motoren des Triebfahrzeugs in vieler Hinsicht günstiger als zum Beispiel eine direkte Einspeisung (d.h. ohne Netzstromrichter) und entsprechend niedrigerer Zwischenkreisspannung.

In Fig. 3 ist für eine 1,5 kV Gleichspannungseinspeisung eine besonders günstige Schaltungsmodifikation dargestellt. Hierbei kann die vom Fahrbetrieb an Wechselspannung her bereits vorliegende Parallelschaltung der Brücken I und II beibehalten werden. Die Brückendiagonalen sind wieder kurzzuschließen und die Sekundärwicklungen sind einseitig zusammenzufassen. Auf netzseitige Spannungsteilung über Kondensatoren kann verzichtet werden, ebenso auf die Reihenschaltung der Brücken. Durch die Vierfachparallelschaltung von GTO-Thyristoren können vorteilhaft höhere Leistungen übertragen werden.

Durch die Erfindung wird die gestellte Aufgabe mit einem Minimum an Schaltmitteln und weiter verringerten Umschaltnotwendigkeiten unter Verwendung bereits vorhandener Bauelemente bei höherer Leistungsübertragung sinnvoll gelöst.

## Ansprüche

1. Schaltungsanordnung für an Fahrdrahtspannungen verschiedener Systeme betreibbare Mehrsystemfahrzeuge mit einem Netzstromrichter, der wahlweise über einen Netztransformator an eine Wechselspannung oder eine von zwei vorzugsweise im Verhältnis 2 : 1 stehende Gleichspannungen (z.B 3 kV oder 1,5 kV) anschließbar ist und der über einen Pulswechselrichter Drehstromfahrmotoren speist, bei der der Netzstromrichter aus Halbpolen mit abschaltbaren Halbleiterschaltern und diesen antiparallelgeschalteten Freilaufdioden besteht, die bei Anschluß an eine Wechselspannung als Vierquadrantensteller über einen Netztransformator und bei Anschluß an eine der Gleichspannungen als Gleichstromsteller betrieben werden,
**dadurch gekennzeichnet,**
daß zwei aus Halbpolen aufgebaute und parallelgeschaltete Brückenschaltungen (I, II) Verwendung finden, die bei Wechselspannungsbetrieb aus getrennten Sekundärwicklungen (1a, 1b) des Netztransformators (1) gespeist werden und die bei Gleichspannungsbetrieb umgeschaltet werden, wobei sowohl beim Anliegen der höheren Gleichspannung (z.B. 3 kV) wie auch der niedrigeren Gleichspannung (z.B. 1,5 kV) beide Brückenschaltungen (I, II) in Reihe liegen und netz- wie auch lastseitig über je einen Spannungsteiler aus zwei Kondensatoren (4, 5 bzw. 6, 7) angeschlossen sind, wobei die mittleren Teilerpunkte (x, y) der Spannungsteiler mit dem Reihenschaltungspunkt (z) der beiden Brücken (I, II) verbunden und die Sekundärwicklungen (1a, 1b) des Netztransformators (1) als Längsinduktivitäten in die Verbindungen der kurzgeschlossenen Brückendiagonalen (c, d) zu den netz- oder lastseitig liegenden Spannungsteilern (4, 5 bzw. 6, 7) einbezogen sind.

2. Schaltungsanordnung nach Anspruch 1,
**dadurch gekennzeichnet,**
daß beim Betrieb an der höheren Gleichspannung (z.B. 3 kV) die äußeren Anschlüsse der beiden Brücken (I, II) am netzseitigen Spannungsteiler (4, 5) und die kurzgeschlossenen Brückendiagonalen (c, d) über die Sekundärwicklungen (1a, 1b) am lastseitigen Spannungsteiler (6, 7) angeschlossen sind.

3. Schaltungsanordnung nach Anspruch 1,
**dadurch gekennzeichnet,**
daß beim Betrieb an der niedrigeren Gleichspannung (z.B. 1,5 kV) die äußeren Anschlüsse der beiden Brücken (I, II) am lastseitigen Spannungsteiler (6, 7) und die kurzgeschlossenen Brückendiagonalen (c, d) über die Sekundärwicklungen (1a, 1b) am netzseitigen Spannungsteiler (4, 5) angeschlossen sind.

4. Schaltungsanordnung für an Fahrdrahtspannungen verschiedener Systeme betreibbare Mehrsystemfahrzeuge mit einem Netzstromrichter, der wahlweise über einen Netztransformator an eine Wechselspannung oder eine von zwei vorzugsweise im Verhältnis 2 : 1 stehende Gleichspannungen (z.B. 3 kV oder 1,5 kV) anschließbar ist und der über einen Pulswechselrichter Drehstromfahrmotoren speist, bei dem der Netzstromrichter aus Halbpolen mit abschaltbaren Halbleiterschaltern und diesen antiparallelgeschalteten Freilaufdioden besteht, die bei Anschluß an eine Wechselspannung als Vierquadrantensteller über einen Netztransformator und bei Anschluß an eine der Gleichspannungen als Gleichstromsteller betrieben werden,
**dadurch gekennzeichnet,**
daß zwei aus Halbpolen aufgebaute und parallelgeschaltete Brückenschaltungen Verwendung finden, die bei Gleichspannungsbetrieb umgeschaltet werden, wobei nur bei Betrieb an der höheren Gleichspannung (z.B. 3 kV) beide Brückenschaltungen (I, II) in Reihe liegen und netz- wie auch lastseitig über je einen Spannungsteiler aus je zwei Kondensatoren (4, 5 bzw. 6, 7) angeschlossen sind und daß bei der niedrigeren Gleichspannung (z.B. 1,5 kV) die Brücken (I, II) parallelgeschaltet ohne Spannungsteilung betrieben werden, wobei die äußeren Anschlüsse der beiden Brücken (I, II) an den lastseitigen Kondensatoren (6, 7) und die kurzgeschlossenen Brückendiagonalen (c, d) über die Sekundärwicklungen (1a, 1b) an der Fahrleitung (9)
liegen.

# FIG.1

# FIG.2

# FIG.3

# FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,A | EP-A-204690 (ELIN-UNION)<br>* das ganze Dokument *<br>--- | 1, 4 | B60L9/30 |
| A | DE-A-3301496 (LICENTIA PATENT-VERWALTUNGS-GMBH)<br>* Zusammenfassung; Figur 2 *<br>--- | 1, 4 | |
| P,X | EP-A-320560 (ACEC)<br>* Zusammenfassung; Figur 1 *<br>----- | 1, 4 | |

|  |  |  | RECHERCHIERTE SACHGEBIETE (Int. Cl.5 ) |
|---|---|---|---|
|  |  |  | B60L<br>H02P |

Der vorliegende Recherchenbericht wurde für alle Patentansprüche erstellt

| Recherchenort | Abschlußdatum der Recherche | Prüfer |
|---|---|---|
| DEN HAAG | 25 JULI 1990 | BEYER F. |

EPO FORM 1503 03.82 (P0403)